# EUROPEAN PATENT SPECIFICATION

(11) **EP 3 198 948 B1**
(45) Date of publication and mention of the grant of the patent: **10.07.2019**
(21) Application number: 14798866.1
(22) Date of filing: 14.11.2014
(51) Int. Cl.: H04W 48/18, H04W 56/00

(54) **NETWORK NODE, USER DEVICE AND METHODS THEREOF**
NETZWERKKNOTEN, BENUTZERVORRICHTUNG UND VERFAHREN DAFÜR
NOEUD DE RÉSEAU, DISPOSITIF D'UTILISATEUR ET PROCÉDÉS ASSOCIÉS

(43) Date of publication of application: 02.08.2017
(73) Proprietor: Huawei Technologies Co., Ltd., Longgang District Shenzhen, Guangdong 518129 (CN)
(72) Inventor: DU, Yinggang, S-164 40 Kista (SE); KOUDOURIDIS, George, S-164 40 Kista (SE); LUNDQVIST, Henrik, S-164 40 Kista (SE)
(74) Representative: Kreuz, Georg Maria
(86) International application number: PCT/EP2014/074596
(87) International publication number: WO 2016/074741

(56) References cited:
- EP-A1- 2 421 302
- EP-A2- 0 762 793
- US-A- 5 915 214
- US-A- 5 983 115
- US-A1- 2009 047 957
- US-A1- 2009 239 530

## Description

### Technical Field

The present invention relates to a network node and a user device. Furthermore, the present invention also relates to corresponding methods, a computer program, and a computer program product.

### Background

In Long Term Evolution (LTE) cell synchronization is the first step when a User Equipment (UE) wants to acquire the cell information and connect to a cell. From the synchronization, the UE acquires Physical Cell Id (PCI), time slot and frame synchronization, which will enable the UE to read System Information Blocks (SIBs) from a radio network.

In present LTE standard, the UE will tune its radio unit by tuning to different frequency channels depending upon which frequency bands the UE is supporting. Assuming that the UE is currently tuned to a specific band/channel, the UE first finds the Primary Synchronization Signal (PSS) which is located in the last OFDM symbol of first time slot of the first subframe (subframe 0) of a radio frame. Generally, the UE tries all sequences to correlate with the received Synchronization Signal (SS) signal to find the synchronization sequence with highest correlation peak. This enables the UE to be synchronized on the subframe level. The PSS is repeated in subframe 5 which means that the UE is synchronized on 5 ms basis since each subframe is 1 ms. From the PSS, the UE is also able to obtain physical layer identity (0 to 2).

In the next step the UE finds the Secondary Synchronization Signal (SSS). The SSS symbols are also located in the same subframe as the PSS symbols but in the symbol before PSS. From the SSS, the UE is able to obtain physical layer cell identity group number (0 to 167).

Using the physical layer identity and the cell identity group number, the UE will know the PCI for a cell. In LTE 504 PCIs are allowed and are divided into unique 168 cell layer identity groups where each group consist of three physical layer identities. As mentioned earlier, the UE detects physical layer identity from the PSS and physical layer cell identity group from the SSS.

For other Radio Access Technologies (RATs), e.g., Code Division Multiple Access (CDMA), Universal Mobile Telecommunications System/High Speed Packet Access (UMTS/HSPA), Global Systems for Mobile Communications (GSM), the cell synchronization principles are similar. In certain frequency channels/bands, a special time slot is allocated fora base station to send a SS and the UE detects the SS as the first step to connect to a cell.

US 2009/0239530 A1 discloses a method for establishing of a connection in a radio communication system.

### Summary

An objective of embodiments of the present invention is to provide a solution which mitigates or solves the drawbacks and problems of conventional solutions.

Another objective of embodiments of the present invention is to provide an efficient solution for user device synchronization with radio access networks in wireless communication systems.

An "or" in this description and the corresponding claims is to be understood as a mathematical OR which covers "and" and "or", and is not to be understand as an XOR (exclusive OR).

The above objectives are solved by the subject matter of the independent claims. Further advantageous implementation forms of the present invention can be found in the dependent claims.

According to a first aspect of the invention, the above mentioned and other objectives are achieved with a network node for a wireless communication system, the network node comprising a transceiver configured to broadcast a first synchronisation signal on a dedicated frequency band, wherein the dedicated frequency band is common to a plurality of operators and wherein the first synchronisation signal indicates an identity of one operator among the plurality of operators, wherein the first synchronisation signal is a sequence or code or codebook in the group comprising: orthogonal codes, codebooks or sequences; semi-orthogonal codes, codebooks or sequences; and quasi-orthogonal codes, codebooks or sequences; and wherein the sequence, code or codebook indicates the operator identity. By providing network nodes configured to broadcast the present first synchronisation signal on the dedicated frequency band, user devices may synchronize efficiently to radio access networks in terms of less frequency band scanning effort and by using less frequency resources. This means e.g. that the synchronization and network connection establishment can be done much faster compared to conventional solutions since the user devices do not have to go through all supported frequency bands of the user device.

Further, since the network nodes of a group of operators broadcast the same first synchronization signal user device transparent handover is possible. Also handover between radio access networks of different RATs is made easier by embodiments of the present network node.

With this first aspect of the invention, sequences, codes and codebooks in current wireless communication systems are used for giving operators or group of operators a unique identity. Thereby, backward compatibility regarding the use of sequences, codes and codebooks is provided and further easy implementation is possible according to this first aspect.

In a first possible implementation form of the network node according to the the first aspect or the network node as such, the network node is part of a radio access network of the at least one operator.

With this implementation form the network node can directly grant access to user devices for fast connection setup. Further, the cost for providing radio network infrastructure can be reduced according to this implementation form.

In a second possible implementation form of the network node according to the any of the first aspect or first implementation from of the first aspect or the network node as such, the transceiver further is configured to broadcast a second synchronisation signal on the dedicated frequency band, wherein the second synchronisation signal indicates a common identity of the plurality of operators.

With this implementation form connection establishment in roaming scenarios can be made easier and faster. Also, emergency services can be provided by using the second synchronisation signal in wireless communication systems.

According to the second implementation form, the transceiver may further be configured to broadcast the first synchronisation signal and the second synchronisation signal simultaneously or sequentially.

The simultaneous broadcasting will reduce waiting time but will consume more power. The sequential broadcasting of the first and second synchronisation signals will be more power efficient but will lead to longer waiting time.

In a third possible implementation form of the network node according to any of the preceding implementation forms of the first aspect or the network node as such, the transceiver further is configured to receive an access request signal from a user device on the dedicated frequency band, wherein the access request signal comprises an access request from the user device.

With this implementation form the access request signal is received on the dedicated frequency band which means that the network node does not have to scan all possible frequency bands. Also, more efficient use of the dedicated frequency band is possible with this implementation form.

In a fourth possible implementation form of the network node according to the third implementation form of the first aspect, the transceiver, in response to reception of the access request signal, further is configured to transmit an access grant signal to the user device if the user device is a subscriber of the at least one operator, wherein the access grant signal comprises an access grant to the user device. Else (if the user device is not a subscriber of the at least one operator) the transceiver is configured to transmit an operator update signal to the user device, wherein the operator update signal comprises an identity of an operator (e.g. which can serve the user device).

With this implementation form the user device can connect to a radio access network if the user device is a subscriber of the at least one operator and hence fast and easy access is provided. However, if the user device is not a subscriber of the at least one operator an operator update signal is provided by which the user device can try to find an available operator for that specific user device from the operator update signal.

In a fifth possible implementation form of the network node according to the fourth implementation form of the first aspect, the access grant signal further comprises spectral efficiency information or price information associated with a radio link between the network node and the user device, wherein the spectral efficiency information or price information is based on the channel quality of the radio link.

With this implementation form the user device can decide to which radio access network the user device wants to connect to based on the spectral efficiency information or the price information in relation to user device requirements, such as e.g. quality of service.

In a sixth possible implementation form of the network node according to any of the preceding implementation forms of the first aspect or the network node as such, the transceiver further is configured to receive a handover indication signal from a user device on the dedicated frequency band, wherein the handover indication signal comprises a solicitation message from the user device.

With this implementation form the user device can solicit handover to multiple radio access networks at the same time, and select the radio access network that provides the best access.

In a seventh possible implementation form of the network node according to the sixth implementation form of the first aspect, the solicitation message comprises a unicast, multicast, broadcast, anycast or geocast address identifying at least one radio access network to which the user device wants to connect.

With this implementation form the user device can indicate the radio access networks that the user device prefers to connect to. Further, by using different type of addresses different network nodes can be addressed thereby adapt the addressing to different applicatbn requirements.

In an eighth possible implementation form of the network node according to any of the preceding implementation forms of the first aspect or the network node as such, the transceiver further is configured to receive data transmissions from a user device on the dedicated frequency band. With this implementation form the dedicated frequency band may also be used for data transmissions. Thereby, the radio resource in the form of the dedicated frequency band can be used more efficiently, e.g. by using FDD or TDD techniques for combining data transmissions with the transmission of the first synchronisation signal.

According to a second aspect of the invention, the above mentioned and other objectives are achieved with a user device for a wireless communication system, the user device comprising a processor and a transceiver; wherein the transceiver is configured to receive a first synchronisation signal on a dedicated frequency band, wherein the dedicated frequency band is common to a plurality of operators and wherein the first synchronisation signal indicates an identity of one operator among the plurality of operators. wherein the first synchronisation signal is a sequence or code or codebook in the group comprising: orthogonal codes, codebooks or sequences; semi-orthogonal codes, codebooks or sequences; and quasi-orthogonal codes, codebooks or sequences; and wherein the sequence, code or codebook indicates the operator identity; wherein the processor is configured to derive the identity of the at least one operator from the first synchronisation signal; and wherein the transceiver further is configured to initiate an access procedure to a radio access network of the at least one operator if the derived identity matches an identity in a list of operator identities for the user device. By receiving the first synchronisation signal, deriving the identity and initiating an access procedure according to the present user device a number of advantages are provided.

By receiving the present first synchronisation signal on the dedicated frequency band, the user devices may synchronize efficiently to radio access networks in terms of less frequency band scanning effort and less frequency resources. This means e.g. that the synchronization and network connection establishment can be done much faster compared to conventional solutions since user devices do not have to go through all supported frequency bands. Further, since the network nodes of a group of operators broadcast the same first synchronization signal user device transparent handover is possible. Also handover between radio access networks of different RATs is made easier by the present network node. Moreover, inter-network handover can be handled with minimum signalling overhead and effort for the user device.

In a first possible implementation form of the user device according to the second aspect, the transceiver further is configured to receive a second synchronisation signal on the dedicated frequency band, wherein the second synchronisation signal indicates a common identity of the plurality of operators. The processor further is configured to select one operator among the plurality of operators. The transceiver further is configured to initiate an access procedure to a radio access network of the selected operator.

With this implementation form the user device does not have to scan all frequency bands for synchronising with a radio access network. This is especially an advantage in roaming scenarios. Further, emergency services can easily be accessed by the user device with this implementation form.

In a second possible implementation form of the user device according to the first implementation form of the second aspect or the user device as such, the transceiver further is configured to transmit an access request signal to the radio access network on the dedicated frequency band for initiating the access procedure, wherein the access request signal comprises an access request from the user device.

With this implementation form the network node can easily detect the access request signal since the access request signal is transmitted in the dedicated frequency band. Further, more efficient utilisation of the dedicated frequency band is possible.

In a third possible implementation form of the user device according to any form of the second aspect or the second aspect as such, the transceiver further is configured to receive an operator update signal, wherein the operator update signal comprises an identity of an operator. The processor further is configured to update the list of operator identities according to the operator update signal.

With this implementation form the user device can update the list of operator identities so as to be given access to available operators and thereby adapt to changing communication infrastructure conditions, e.g. in roaming scenarios.

In a fourth possible implementation form of the user device according to any of the preceding implementation forms of the second aspect or the user device as such, the transceiver further is configured to transmit a handover indication signal to the radio access network on the dedicated frequency band, wherein the handover indication signal comprises a solicitation message from the user device.

With this implementation form the user device can solicit handover to multiple radio access networks at the same time by a single transmission, and select the radio access network that provides the best access. This implementation form also makes it possible to shorten handover procedures for the user device.

In a fifth possible implementation form of the user device according the fourth implementation form of the second aspect, the solicitation message comprises an identity of at least one radio access network to which the user device wants to connect.

With this implementation form the user device can indicate the radio access networks that the user device prefers to connect to, for example based on a preconfigured operator priority list. In a sixth possible implementation form of the user device according to any of the preceding implementation forms of the second aspect or the user device as such, the transceiver further is configured to transmit data transmissions to the radio access network on the dedicated frequency band.

With this implementation form the dedicated frequency band may also be used for data transmission. Thereby, the radio resource in the form of the dedicated frequency band can be used more efficiently, e.g. by using FDD or TDD techniques for combining data transmissions with the transmission of the first synchronisation signal.

According to a third aspect of the invention, the above mentioned and other objectives are achieved by method for a wireless communication system, the method comprising broadcasting a first synchronisation signal on a dedicated frequency band, wherein the dedicated frequency band is common to a plurality of operators and wherein the first synchronisation signal indicates an identity of at least one operator among the plurality of operators, wherein the first synchronisation signal is a sequence or code or codebook in the group comprising: orthogonal codes, codebooks or sequences; semi-orthogonal codes, codebooks or sequences; and quasi-orthogonal codes, codebooks or sequences; and wherein the sequence, code or codebook indicates the operator identity.

According to a fourth aspect of the invention, the above mentioned and other objectives are achieved by method for a wireless communication system, the method comprising
receiving a first synchronisation signal on a dedicated frequency band, wherein the dedicated frequency band is common to a plurality of operators and wherein the first synchronisation signal indicates an identity of at least one operator among the plurality of operators, wherein the first synchronisation signal is a sequence or code or codebook in the group comprising: orthogonal codes, codebooks or sequences; semi-orthogonal codes, codebooks or sequences; and quasi-orthogonal codes, codebooks or sequences; and wherein the sequence, code or codebook indicates the operator identity;
deriving the identity of the at least one operator from the first synchronisation signal; and
initiating an access procedure to a radio access network of the at least one operator if the derived identity matches an identity in a list of operator identities for the user device.

The advantages of the methods according to the third aspect or the fourth aspect are the same as those for the corresponding device claims according to the first and second aspects, respectively.

The present invention also relates to a computer program with a program code for performing a method according to any of the third or fouth aspect of the invention when the computer program runs on a computer.

Further applications and advantages of embodiments of the present invention will be apparent from the following detailed description.

### Brief Description of the Drawings

The appended drawings are intended to clarify and explain different embodiments of the present invention, in which:
- Fig. 1 shows a network node according to an embodiment of the present invention;
- Fig. 2 shows a method for a wireless communication system according to an embodiment of the present invention;
- Fig. 3 shows a user device according to an embodiment of the present invention;
- Fig. 4 shows a flow chart of another method for a wireless communication system according to an embodiment of the present invention;
- Fig. 5 illustrates an embodiment of a wireless communication system according to the present invention;
- Fig. 6 shows a flow chart of a method in a user device according to an embodiment of the present invention;
- Fig. 7 shows another flow chart of a method in a user device according to an embodiment of the present invention; and
- Fig. 8 shows an example of how access carriers and common carriers may be allocated according to an embodiment of the present invention.

### Detailed Description

To find a suitable synchronization signal in current wireless communication systems, the user device (e.g. a UE in LTE systems) has to scan all the frequency bands the user device supports. It is often not a problem in present RATs since almost all cellular networks operate between the 900 MHz and 2.6 GHz frequency band. However, in future 5G (Fifth Generation) or B5G (Beyond 5G) wireless systems, higher frequency bands will probably be introduced, e.g., 6 GHZ, 10 GHz, 28 GHz or even higher frequency bands.

If the current synchronization procedure does not change, it will be very power consuming for the user device to scan all supported frequency bands to find a suitable frequency band to access a cell and connect to the cell. Further, to satisfy the high capacity requirement in 5G/B5G systems cellular cell size will become smaller and smaller, which means more and more frequent handovers leading to increased signalling overhead.

Moreover, a highly possible scenario in the future is that a user device subscribes to services offered by a Service Provider (SP) and not directly to a Network Operator (NO) or a Virtual Operator (VO). The SP can buy the communication (network) services needed from NOs or VOs. Further, the NO/VO may bargain with different radio access operators and finally decides which operator and which RAT that should serve the user device in a certain area.

A NO has its own communication infrastructure (including core networks, network nodes, etc.) in an area to serve its subscribers. A VO will have to rent infrastructure from a NO in the area to serve its subscribers. One operator can be a NO in one area and VO in another area. It will also be possible for a VO to rent infrastructure in any area to serve its subscribers (user devices). Specifically, if a user device makes global roaming its original SP (either NO or VO) will automatically become a VO.

Therefore, to adapt to the requirements described above, the user device needs to access different operators in different areas and/or at different times. That is, the user device has to scan all supportable frequencies to find all operators it can access all the time, whiche.g. helps the SP to find the best operator but will lead to very high power consumption in the user device. There is also the challenge that the user device may even not know which operator that physically will serve the user device before the user device sends access requests in a radio access network.

For the above and further reasons embodiments of the present invention relates to a new network node, a new user device, and methods thereof.

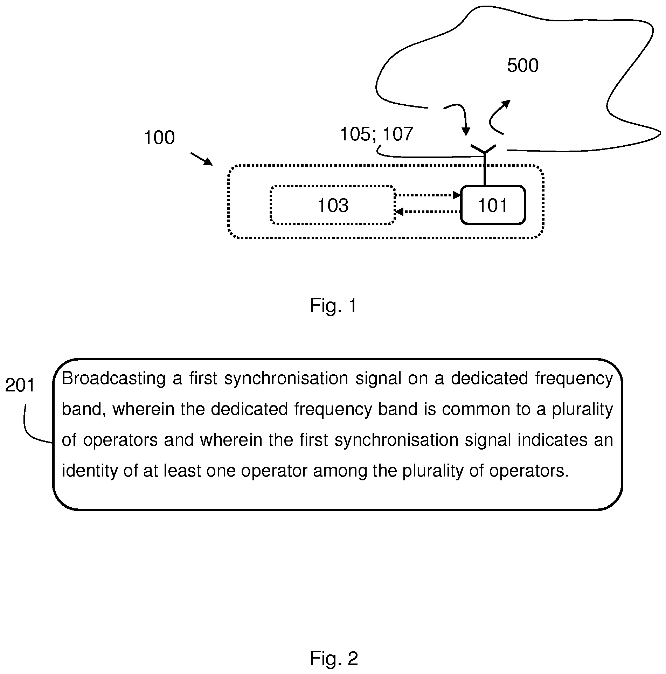

Fig. 1 shows a network node 100 according to an embodiment of the present invention. The network node comprises a transceiver 101 which in this particular example is connected to transmit 105 and receiving 107 antennas, respectively. The transceiver 101 is configured to broadcast a first synchronisation signal on a dedicated frequency band in a wireless communication system 500. The dedicated frequency band should be common to a plurality of operators, and the first synchronisation signal should also indicate an identity of at least one operator among the plurality of operators. The common frequency band is therefore used by all the plurality of operators for broadcasting the first synchronisation signal.

In Fig. 1 the network node 100, in this particular example, also comprises a processor 103 which is communicably coupled (the communication means are illustrated with arrows) to the transceiver 101. The first synchronisation signal therefore indicates the identity of one operator or a group of operators. The latter case is e.g. suitable in global roaming scenarios, and in this case several independent operators may be grouped together to use a first synchronization signal for a group of operators. It is also shown in Fig. 1 that the network node 100 may also have receiving capabilities, e.g. for receiving communication signals from one or more user devices of the wireless communication system 500.

The present network node 100 is a communication device being part of a wireless communication system 500, and especially a radio access network. Examples of network nodes are base stations, NodeB, enhanced NodeB, Access Point (AP), a radio unit, a relay node, etc.

Fig. 2 shows a corresponding method for a wireless communication system 500, e.g. executed in a network node 100. The method comprises the step of broadcasting 201 the first synchronisation signal on a dedicated frequency band in the wireless communication system 500. The method may e.g. be executed in a network node described in Fig. 1.

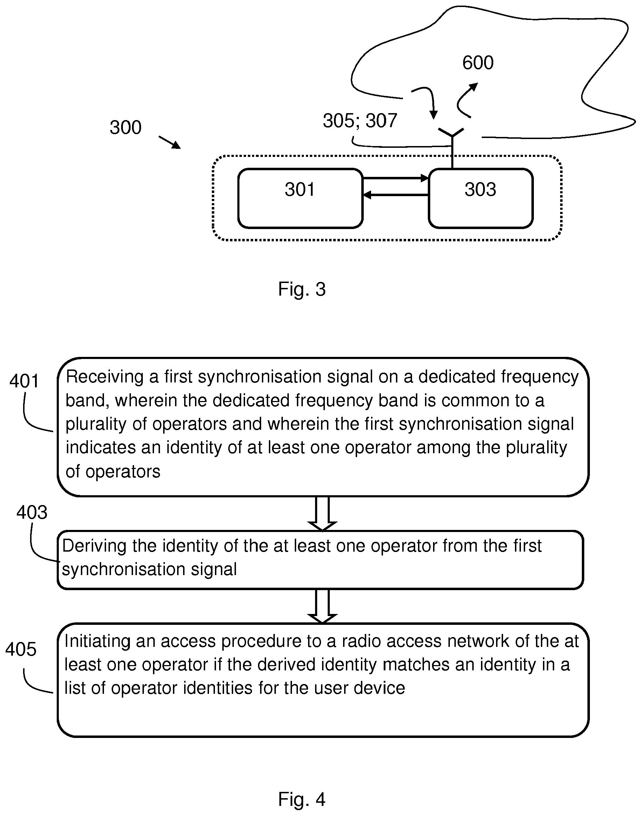

Fig. 3 shows a user device 300 according to an embodiment of the present invention. The user device 300 is configured and adapted for communication with radio access networks 600 of wireless communication systems 500. In this respect the user device 300 comprises a processor 301 communicably coupled to a transceiver 303, and the transceiver 303 in this example is further connected to transmit 305 and receiving 307 antennas of the user device 300. The transceiver 303 is configured to receive a first synchronisation signal on the dedicated frequency band. The processor 301 is configured to receive the first synchronisation signal from the transceiver 303 and derive the identity of the at least one operator from the first synchronisation signal, e.g. by signal processing and logical operations. The transceiver 303 is further configured to initiate an access procedure to the radio access network 600 of the at least one operator if the derived identity matches an identity in a list of operator identities for the user device 300. The list of operator identities may be stored in a memory unit (not shown) of the user device 300 or a SIM card of the user device 400.

Fig. 4 shows a flow chart of a corresponding method for a wireless communication system. The method comprises the step of receiving 401 a first synchronisation signal on the dedicated frequency band. The method further comprises the step of deriving 403 an identity of at least one operator from the first synchronisation signal. Finally, the method further comprises the step of initiating 405 an access procedure to a radio access network 600 of the at least one operator if the derived identity matches an identity in a list of operator identities for the user device 300. The method may e.g. be executed in a user device 300 as described in Fig. 3.

It is therefore understood from the above that embodiments of the present network node 100, user device 300, and methods thereof therefore relate to a new synchronization/access scheme where a dedicated frequency band, herein also denoted as access carrier, is set for a plurality of independent operators and is used for broadcasting the first synchronisation signal in a wireless communication system 500.

The present operator of the network node 100 and the user device 300 described below may be a NO or a VO. Further a SP may be represented by, or use a NO and/or a VO so that a user device 300 may subscribe to a SP and the SP takes care of the network communication aspects wherever the user device roams by e.g. buying communication services of NOs and/or VOs.

Regarding billing aspects if the user device 300 subscribes to a SP, the radio access network to which the user device is connected to can e.g. transfer the bill to the SP. However, the situation may occur that a NO connected to the user device 300 does not have a contract with the SP. In an example, the SP has signed a contract with NO B, and NO B has signed a contract with a local NO C to rent the network infrastructure in a certain area. One user device 300 is finally served by the local NO C. Then the local NO C will charge NO B and NO B will charge the SP, and the user device 300 will be charged by the SP.

Further, the different operators may be distinguished by their own sequence or code or codebook representing operator identities. For example, Zadoff-Chu (ZC) sequences or other orthogonal sequences, such as Walsh-Hadamard sequences, or semi-orthogonal or even quasi-orthogonal sequence (for example, m sequence) may be used for indicting the operator identities. The codes or codebooks may also be of orthogonal, semi-orthogonal or quasi-orthogonal types, such as present codebooks defined in the LTE standard.

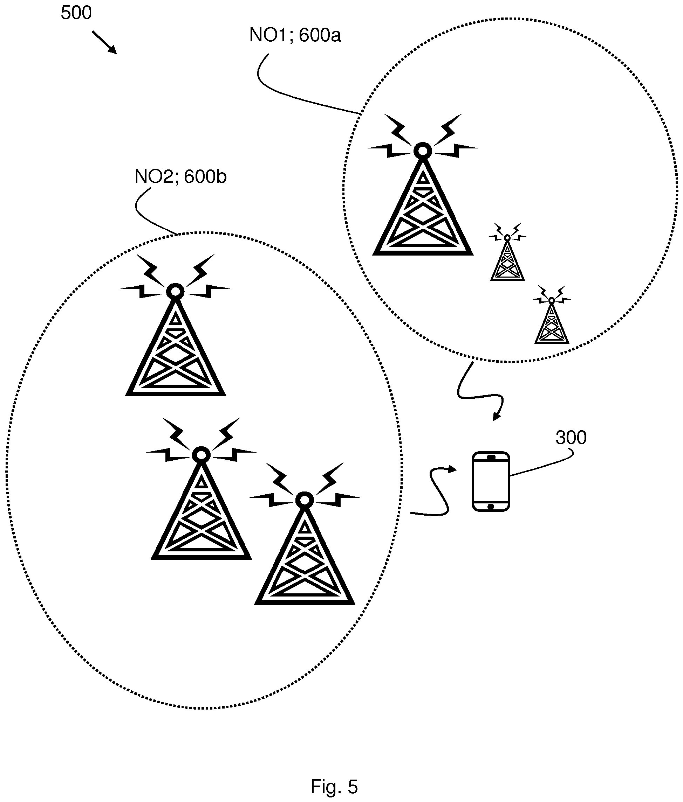

Fig. 5 illustrates an embodiment of a wireless communication system 500 according to the present invention. The wireless communication system 500, in this example, comprises a user device 300 and two different NOs, i.e. NO1 and NO2, with their own respective networks nodes in two independent radio access networks 600a and 600b, respectively. The network nodes of the radio access networks 600a and 600b broadcast first synchronization signals in the wireless communication system 500 and the user device 300 receives the first synchronization signals. The user device 300 does not need to identify which network node 100 that is serving or is willing to serve the user device 300 in the wireless communication system 500. When a user device 300 successfully demodulates/decodes the first synchronization signal from a network node 100, the user device 300 has synchronized to the radio access network 600a and/or 600b to which the network node belongs. Then the user device 300 can send access requests accordingly to connect to the selected radio access network 600a and/or 600b.

According to an embodiment of the present invention the transceiver 101 of the network node 100 is further configured to broadcast a second synchronisation signal on the dedicated frequency band in the wireless communication system 500. Contrary to the first synchronisation signal the second synchronisation signal indicates a common identity of the plurality of operators. This means that there is an identity (or a corresponding "operator address") which is common to all the plurality of operators. The second synchronisation signal may e.g. be used for emergency access even if a user device 300 is not a subscriber to an operator among the plurality of operators.

It is noted that the first synchronisation signal and the second synchronisation signal may be broadcasted simultaneously or sequentially by a network node 100. The simultaneous broadcasting will reduce waiting time but will consume more power. The sequenial broadcasting of the first and second synchronisation signals will be more power efficient but will lead to longer waiting time.

Furthermore, a network node 100 may broadcast more than one first synchronization signal if the network node 100 is shared by multiple operators. To maximize the detection possibility the radio access network 600 may schedule the first and second synchronization signals at different times if the wireless communication system 500 is not designed for inter-network synchronization.

In an embodiment of the present invention Uplink (UL) transmissions from the user device 300 can be made over the dedicated frequency band, which allows signalling to be minimized since multiple radio access networks can receive the same transmission and use the transmission for estimating the channel quality between the user device 300 and network nodes. In the following this is denoted as a common carrier. This may or may not be the same physical carrier as the above mentioned access carrier, and the reason that the common carrier is distinguished with a different name from the access carrier is that the common carrier is used for a different purpose. At the same time UL transmissions over the dedicated frequency band may effectively implement a fast handover procedure between different radio access networks. Therefore, when a user device 300 subscribes to a SP or a VO and attempts to make a handover between different radio access networks there is also a benefit for the radio access network, along with an efficient synchronization, to have a good estimate of the radio channel to the user device 300 to be able to determine whether the SP can offer services to the user device 300 and at what price. With conventional solutions this would require that the user device 300 has to report measurement results for other radio access networks either directly to those radio access networks or via the SP.

When a user device 300 signs a contract with a NO, it will be notified the identity (e.g. a "sequence number" which corresponds to the identity) of this NO. If a user device 300 signs with a VO, the VO can also assign the identity of a default NO to the user device 300. It is also recommended that the SP provides a list of NOs to the user device 300 to ensure access, and the list may be dynamically updated according to an embodiment of the present invention. In that sense, the user device 300 will take an identity from the list to synchronize to the radio access network. For example, if an operator D has sole contract with another operator E, the operator D can reuse the identity of operator E.

The list of operator identities in the user device 300 may be updated by using an operator update signal comprising an identity of an operatorto be added to the list of operator identities. For example, the network node 100 receives an access request signal comprising an access request from the user device 300 on the dedicated frequency band. The network node 100 transmits an access grant signal comprising an access grant to the user device 300 if the user device is a subscriber of the operator to which the network node 100 belongs. If that is not the case the network node 100 may transmit an operator update signal to the user device 300. The operator update signal may also comprise operator delete instructions/indications which means that one or more operators should be deleted from the list of operator identities of the user device 300.

Generally, when a user device 300 receives the first synchronization signal two main cases may be considered:
1. The first synchronization signal indicates at least one operator identity in the user device's list of operators; or
2. The first synchronization signal indicates no operator identity in the user device's list of operators, e.g. likely to occur during roaming.

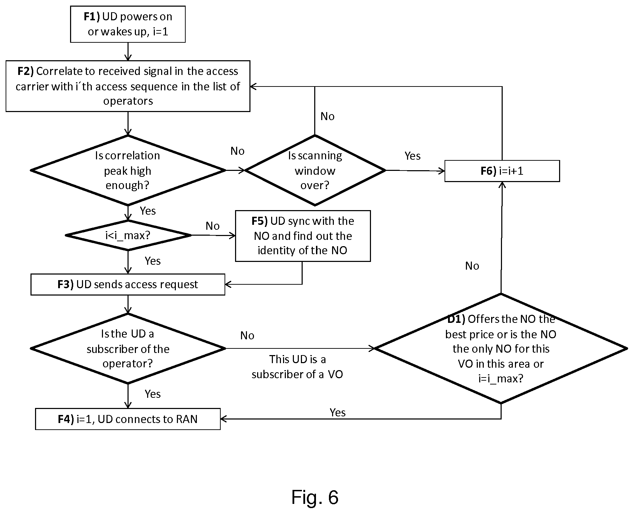

Fig. 6 shows a flow chart of an example of the first and second cases mentioned above. Without loss of generality, in the following examples ZC sequences are used as access sequences as an example for illustrating embodiments of the present invention. Further, throughout the present disclosure the expression "access sequence" should be read as an identity of an operator or a group of operators. The use of "access sequence" is, and would be a convenient alternative for representing an operator identity in possible implementations but it should be realised that an operator identity may also be represented in a number of other ways.

Further, if the same ZC sequences are adopted as used in present LTE standard, at most 504 operators can be identified. Without considering VOs, this number would be enough to identify all current operators throughout the world (approximately 200 operators). For private access point owners, one special access sequence (or a set of special access sequences) can be allocated considering their limited and isolated coverage.

To simplify the analysis of the first case, it is assumed that only one default operator is assigned to the user device 300 without loss of generality. Since the ZC sequence is used to identify different operators (or groups of operators), all network nodes 100 that belong to the same operator will transmit the same ZC sequence, i.e., the user device 300 will not identify which network node 100 that is sending the first synchronization signal. In this example, the user device 300 will have a default operator no matter if the user device 300 subscribes to a NO or a VO, i.e., a default first synchronization signal is used.

With reference to Fig. 6, at F1 the user device 300 is powered on or woke up and the iteration index i is set to 1, i.e. i = 1. The iteration index also refers to the i'th access sequence in the list of operator identities of the user device 300.

At F2, without scanning all supported frequency bands, the User Device (UD) 300 goes directly to the present access carrier on the dedicated frequency band to find the first synchronization signal. Again it is to be pointed out that the access carrier is common to a plurality of different operators. The user device 300 detects the first synchronization signal via calculating the correlation of the broadcasted first synchronization signal with the i'th access sequence (corresponding to operator identity) assigned by a NO/VO in the contract or stored before power-off in the memory. This calculation process is the same as in the present LTE standard. If there is a sequence (or index) list of operators in the user device 300, the user device 300 will start with the default sequence.

If the correlation peak is high enough to access and index i is less than i_max, the user device 300 will correspondingly initiate the access procedure at F3 by sending access request. The threshold of the correlation peak can be adaptive depending on the gap between the access carrier and the supported frequency bands. The larger the gap, the higher the threshold is set to ensure the access capability.

If the user device 300 cannot find enough high correlation peak within a scanning window, the user device 300 will take the next access sequence in the list of operator identities to correlate the received first synchronization signal with by incrementing index i, i.e. i=i+1, at F6 and return to F2. Before step F6 the user device may check whether the scanning window is over or not. Generally, a scanning window should be able to last at least one first synchronization signal transmission period and can be several first synchronization signal transmission periods long if needed.

Using the above described principle, it is also possible to try all access sequences in the list of operator identities (by incrementing the index i) with the received first synchronization signal simultaneously followed by the operator identity comparison. The comparison is for checking whether the default access sequence correlation corresponds to the correlation peak ora value over the threshold. It means that the nearest network node is not the SP for this user device 300 since when the user device 300 can make correlation simultaneously for all sequences, all correlation results will be obtained together. A threshold value is needed to check whether a correlation value for the default sequence is over the threshold value. If the correlation value is over the threshold value but not the peak value, i.e. the path loss of the default operator is larger than another operator's network node which is closer to the user device. If there is a list of operator identities, then the comparison is to check one by one following the sequence index in the list. This correlation method can speed up the comparison process since all correlations can be made simultaneously but will need higher calculation capabilities in the user device 300.

Multiple network nodes of the radio access network 600 may receive the access request signals when a user device 300 tries to access a radio access network, since the user device 300 may not need to access a specific network node 100 but just the specific radio access network 600. The radio access network 600 receives all signals received from all its network nodes. When the user device 300 finds a radio access network 600 of an operator after having transmitted access request at F3 in Fig. 6 the following cases are possible.

If the user device 300 subscribes to an operator, the radio access network 600 of the operator will adopt the user device 300 and the Radio Access Network (RAN) 600 will connect to the user device 300 at F4. The adoption here means that further system information can be exchanged for further service. If the user device 300 subscribes to a VO (a real VO or another NO) or is not a subscriber of the operator, the radio access network 600 will bargain with the VO at D1 and if the access network and the VO agree that the operator serves the user device 300, the access network will adopt the user device 300. The bargain may e.g. concern pricing and communication infrastructure aspects. It is also checked here if index i is less than i_max.

Otherwise the user device 300 will change its access sequence at F6 by incrementing index i and return to step F2. The user device may change its access sequence e.g. by using any of the following methods:
- The VO informs the radio access network 600 that another NO is available for the user device 300, and the radio access network 600, via a network node 100, transfers this information to the user device 300 with the use of an operator update signal. The user device 300 thereafter uses the new access sequence (not shown in Fig. 6);
- The radio access network 600 informs the user device 300, via a network node 100, that the user device 300 cannot be served. In that case the user device 300 takes the next access sequence in the list of operator identities (iteration i = i + 1) and tries to access a radio access network 600 with the updated access sequence ;
- The radio access network 600 does not send any information to the user device 300. After a predefined period without any response, the user device 300 will take the next access sequence (iteration i = i + 1) in the list of operator identities. This method will take longer time than the two above described but will reduce overhead signalling in the wireless communication system 500.

With further reference to Fig. 6, for the second case mentioned above, no first synchronization signals associated with operator identities in the user device's list of operators provide enough or good correlation at F2 in Fig. 6. In this case a common synchronization signal, i.e. a second synchronization signal, may be used, and has access sequence number i_max in Fig. 6, which means that the length of a user device's 300 list of operator identities is i_max-1 in this example.

Upon failure to identify a known access sequence, the user device 300 goes to the access carrier at F2 to find the second synchronization signal that all operators send at certain time interval, typically much longer than the time interval of broadcasting of the first synchronization signal. The second synchronization signal is broadcasted via the access carrier by all of the plurality of operators, and possibly asynchronously. It should be noted that a network node 100 can broadcast its own first synchronization signal and second synchronization signal simultaneously or sequentially depending on application and performance aspects.

The user device 300 detects the second synchronization signal sent by network nodes of one or more of the operators, and selects one (or more) of the operators, e.g. a first operator or the operator with the highest signal strength and synchronize with the selected operator. Yet the user device 300 doesn't know the first synchronization signal of the operator.

In the next step the user device 300 identifies the first synchronization signal of the operator. The identified first synchronization signal is added in the user device's 300 list of operator identities or in a special roaming list of operator identities. By using the first synchronization signal the user device 300 can make more accurate measurements, and the user device 300 will correspondingly initiate the access procedure as explained for the first case above.

It should be noted that in an area where the user device 300 has not signed any contract with an operator, with the use of the second synchronization signal at least emergency services may be guaranteed after the user device 300 has synchronized with an operator in this area. In this case, the information exchanged between the access network and user device 300 is to confirm the emergency link for the emergency services.

For a user device 300 in idle state, the cell reselection can be realized by monitoring the Paging Control Channel (PCCH) or some other Downlink (DL) control channel via Discontinuous Reception (DRX) mode.

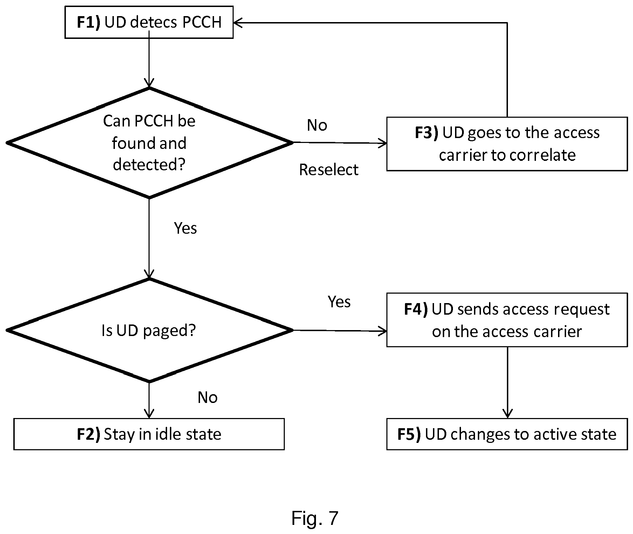

Fig. 7 shows a flow chart of a method when the user device 300 starts from idle state. At F1 the user device 300 detects the PCCH. If the user device 300 cannot find the PCCH in the assigned timing, it generally means that the user device 300 has lost the synchronization and the user device state becomes detached. In that case the user device 300 will go to the access carrier at F3 and initiate the access procedure again to reselect the cell. Otherwise, if the user device 300 can detect the PCCH correctly and the user device 300 finds that the user device 300 is paged, the user device 300 will initiate the access procedure and change to active state at F4 and F5 by transmitting access request. Otherwise if the user device 300 cannot detect the PCCH correctly but finds that the user device 300 is not paged, there is no need to reselect the cell and the user device 300 stays in idle state at F2.

If the user device 300 is able to send pilot signals or beacon signals in the idle state, the paging will be easier since the radio access network will know the user device 300 position. The radio access network 600 can realize the cell reselection for the user device 300 and this procedure can even be transparent to the user device 300 without introducing any air interface signalling exchange. For a user device 300 in active state, a handover can be initiated by the radio access network 600 because the radio access network 600 knows the user device 300 position and channel quality via DL/UL transmissions and is able to allocate corresponding network nodes to serve the user device 300.

Moreover, with longer ZC sequence more unique sequences can be used by the operators. If more sequences are available an operator could e.g. have 3 or more sequences so that network nodes of the operator can be grouped into group 0, 1 and 2 (or larger) to distinguish from closely neighbouring network nodes from each other. In that case, the user device 300 can identify which network node group has strongest Reference Signal Received Power (RSRP) and access directly to that network node group, which can make the access request easier to detect by the radio access network 600.

Different radio access networks for different RATs may be synchronized or asynchronized to each other. Synchronized radio access networks send the access sequences synchronously, which means that the correlation between different access sequences is known and can be kept low. Unsynchronized radio access networks typically send the access sequences with some random time shift, which means that the correlation between differentaccess sequences of different radio access networks can be higher. For example, different RATs of the same operator can be asynchronous owing to different coverage. The type of identification sequence can be selected to work well for synchronized or unsynchronized networks.

Embodiments of the present invention also cover different handover aspects in wireless communication systems. This also implies the use of different handover indication signals sent by the user device and received by one or more network nodes of the same operator and/or different operators according to an embodiment.

To perform inter-radio access network handover using the dedicated frequency band, in this case the common carrier, the following procedure/method can be used.

The user device 300 continuously measures link quality deteriorations or failures, lower Quality of Service (QoS), poorer Channel State Information (CSI) and lower rate Modulation and Coding Schemes (MCS), increased Block Error Rate (BLER), etc., on the radio access network to which the user device 300 is connected to. The user device 300 may implement different policies to decide when to discover other radio access networks and measure the link quality. For example, threshold values for the QoS of the connected link may be used to indicate when handover should be initiated, and such handover thresholds may be dependent on the type of service used, battery status, carrier aggregation capability of the user device, etc. Another possibility is to periodically evaluate the quality of alternative radio access networks by transmitting packets over the common carrier.

No matter if the user device 300 already uses a dedicated carrier belonging to a specific NO or not, the following procedure characterises the handover of the data transmission of the user device:
- The user device makes UL data transmission on the access carrier, e.g. using contention based random medium access.
- The user device 300 may include addresses or identities of multiple radio access networks in the UL transmissions, e.g. by using broadcast, multicast, anycast or geocast addresses.
- The addressed NOs that receive the UL data transmission from the user device 300 may bid and negotiate for taking over the connection to the sending user device 300.
- The NO that takes over the connection signals to the user device 300 and reconfigures the connection to use dedicated/shared channel of the SP/NO/VO.

A user device 300 that performs the above procedure is in a handover state. The handover state ends when another NO takes over the data transmission over its operator carrier. The NO that takes over the data transmission is hereafter denoted as the target NO.

Prior to handover the user device 300 may inform its serving NO, i.e., the NO the user device 300 is connected to, about the handover. When the user device 300 enters the handover state the serving NO constitutes the so called source NO. When a user device 300 is in handover state the source NO may continue to receive or send packets from or to the user device 300 through the common access carrier. In another case the user device 300 may decide whether it may send duplicate packet transmission over the operator carrier of the source NO and the common access carrier. The advantage of this is that the user device 300 can ensure the delivery of its packets to their destination.

Furthermore the time period (or time window) at which a user device 300 is in handover state may be limited. The time may be determined by the user device 300, or the source NO (e.g. via network nodes) or by both based on a common agreement, and it could differ between different user devices NOs, and/or SP/VOs. In one case the source NO may decide on the time window for which it permits a user device 300 to be in handover state, i.e. handover time window. This can be done with a handover time indicator transmitted from the radio access network 600 (via a network node 100) to the user device 300 in a handover signal. The handover time indicator instruct the user device 300 the time period when a fall-back solution will be executed. The handover time indicator may be expressed in terms of duration in time slots, time units (e.g. seconds), or in terms of a specific time.

If the handover procedure ends successfully, i.e., a target NO is found within the handover time window, then the user device 300 continues its data transmission over the target operator carrier as instructed by the target NO. In that case, the source NO releases and reallocates the resources of the operator carrier to another user device. In this respect a handover status indicator can be defined and sent by the user device 300 to the radio access network 600. The handover status indicator indicates that the handover procedure has been completed successfully or a handover failure has occurred.

If the handover process is not successful by the expiry of the handover time window, i.e., no new target NO has been found, the user device 300 may decide whether to fall back and continue its transmission via the operator carrier of the source NO, or to extend the handover process in finding a target NO to take over the data transmission. Upon expiry of the handover time window the source NO may release or reallocate the operator carrier to another user device. Also the possibility of falling back and continue data transmission upon handover time window expiry may be dictated by the source NO and/or agreed between the source NO, the SP/VO and the user device 300. In this respect a handover fallback indicator can be defined and sent by the radio access network 600 (via a network node 100) to the user device 300. The handover fallback indicator indicates or controls whether the user device 300 may fall back to its previous state and resume its transmission or whether the resources will be released and there is no fall back state from which a transmission may be resumed. Depending, for instance, on the radio access network and RAT and on the NO, there are many different fallback alternatives, as for example:
- Continue data transmission over both the shared or dedicated resources of the operator carrier, assigned to the user device 300 prior to handover indication, and the common carrier;
- Resume, in active or connected state, data transmission over the shared or dedicated resources assigned to the user device prior to handover indication;
- Resume, in active or connected state, data transmission over a new shared or dedicated resources of the operator carrier (as e.g. determined and transmitted by the network device);
- Resume in idle state, which may mean that dedicated/shared resources of the operator carrier prior to handover indication have been released;
- Renew the handover time period;
- Reconnect to the radio access network 600;
- Renegotiate over the common carrier.

An alternative fallback mechanism is that the radio access network 600 extends the handover time window, by signalling a new value to the user device 300 by means of a new handover time signal.

The handover time window length may be individually set per user device 300, for instance, based on the type of the data transmission. The advantage of this is that it supports effective handover procedure performance for different types of user data transmissions. In addition it may also be dynamically determined by the SP/NO/VO individually or in collaboration between all SP/NO/VO that utilise the common access carrier. In the case of collaborating SPs/NOs/VOs the handover time window length may be determined based on the number of handover procedures, i.e., the number of user devices being in handover state, the number of SPs/NOs/VOs that utilise the common access carrier in the area, the data transmission load, type of service, etc.

In some embodiments of the present invention the time window may be common to many user devices, the time window length may then be signalled over a broadcast channel in this case. For example, each NO may signal a time window length over its own broadcast channel. When individual settings are used for the time window length these may be signalled either over the common access carrier at the beginning of the handover procedure, or they may be signalled in advanced to each user device over the serving operator carrier.

The bidding may be performed in one or several steps and may be completed by means of negotiations between the NO and the SP associated with the user device 300. The negotiations aims to set the terms and conditions associated with the data transmission, including, QoS, transmission cost, etc. The source NO may also bid and renegotiate to take over the data transmission anew. The bidding and negotiation processes may be omitted if only one NO is addressed and/or the terms and conditions are already negotiated, respectively. The advantage of this is that the execution time of the handover procedure is reduced and the handover becomes more efficient.

Even if some part of the resources of the access carrier can be used by any user device 300 for data transmission, it is not ruled out that other parts of the access carrier can be used for scheduled access so that one or many radio access networks may grant access rights for the user device to transmit. The advantage of this is that it facilitates effective use of the common access carrier resources.

With regards to the identity of the at least one radio access network it is stated that a user device 300 may send to a specific RAN address or to a broadcast address, which should be interpreted as "to whoever listens to this common channel (and may be interested)". A broadcast address is a logical address at which all network nodes connected to a multiple-access communications network are enabled to receive data. A message sent to a broadcast address is typically received by all network-attached network nodes, rather than by a specific network node. It would also possible to use a multicast address to reach a subset of preferred radio access networks. In this case a multicast address would be a logical identifier for a group of radio access networks in the common carrier that are available to process data. As compared to a unicast address which is an identifier for one single radio access network.

In addition to those mentioned above there are two more kinds of addressing which can be used according to this embodiment of the present invention. Anycast is network addressing in which data from a single sender are routed to the topologically nearest network node in a group of potential receivers, though it may be sent to several network nodes, all identified by the same destination address. It is a specialized form of broadcast addressing. Geocast refers to the delivery of information to a group of destinations in a network identified by their geographical locations. It is a specialized form of multicast addressing.

For a user device 300 transmitting data via the common carrier is not necessarily triggered by handover events. A user device 300 may decide to continue its transmission via the common carrier at any time, e.g., for the discovery of a new radio access network and new NO.

In the handover procedure a handover request, also referred to as a handover signal, may be sent by the user device 300. However, in a first embodiment, instead of the traditional handover request message, a handover indication signal such as a solicitation message may be used. A handover request (or handover signal) assumes a response as opposed to a handover indication signal, the reception of which may be ignored by the transceiver of a receiving network node. In a second embodiment, the mere transmission of a user device's data packets may be an actual indication of handover. Hereafter, a handover indication signal comprising a solicitation message, will be simply referred to a solicitation signal. A solicitation signal differs from a handover signal in the following way: a solicitation signal is used for handovers where the user device does not know the final target network of the handover procedure a-priori, whilst a handover signal refers to a handover that targets a specific network. With other words, the handover signal typically is a signal where the target network is also the final. To this end, a handover signal is a special case of a solicitation signal, i.e., one comprising a unicast address.

More specifically, the handover solicitation may be explicit, as in the first embodiment, or implicit, as in the second embodiment. Explicit handover solicitation always requires a solicitation message as a handover indication signal, i.e. a solicitation signal. A solicitation message for handover is a message that it is sent by the user device 300 to nudge a radio access network or operator to take over the data transmission from/to the user device 300. The operator may respond with service provisioning confirmation message or a service provisioning advertisement message, etc. Handover solicitation could be also made implicit when the user device 300 starts sending packets via the common carrier. The operator who is using the common carrier and is willing to take over the transmission of the packets may send a confirmation and/or acknowledgement for the packet forwarding to the user device300. The confirmation/acknowledgement may include all necessary information e.g., information about the dedicated frequency band, specific RAN addresses, etc. In case of acknowledgements from multiple operators this process can be followed by some negotiation messages which will enable the user device 300 to select among the operators that provide higher QoS.

In an embodiment of the present invention all network nodes and/or operators are assumed to use the same addressing/identification scheme on the access carrier. In another embodiment of the present invention the UL address/identification used for a radio access network is the same as the DL synchronization sequence. This has the advantage of allowing a very simple procedure for the user device 300 to address the radio access network. The drawbacks of this embodiment is that the access sequence is longer than necessary to guarantee good correlation properties, and that it is not suitable to transmit in the UL in case of a Time Division Duplex (TDD) access carrier since other user device 300 may get spurious synchronization to the UL transmission.

In an embodiment of the present invention UL transmissions are addressed to one or more radio access network specific Medium Access Control (MAC) addresses to indicate which radio access network(s) are expected to receive the transmission from the user device 300. In an embodiment of the present invention the address/identifier of the user device 300 on the access carrier identifies both an operator that is currently serving the user device 300 and a temporary user device 300 identity. One way of implementing this is to concatenate the identifiers of the operator and the user device 300. In another embodiment the identifier also identifies a SP. In one embodiment the user device 300 identifier is derived based on a hash function that takes into account the SP address, NO address and user device 300 specific address as assigned by the SP.

A user device 300 with dual radio/carrier aggregation capabilities including a common carrier and a serving carrier (serving carrier is a conventional carrier by which the access network serves the user device 300) would be able to send packets over the common carrier in parallel to transmissions over the serving carrier. If the user device 300 does not have the capability to use the two carriers in parallel it would have to switch between the carriers to make the transmissions on the common carrier. The transmissions on the common carrier may be special signalling packets sent to the SP, which has the advantage of not requiring that the packets belong to the same connection. However, in an embodiment the packets belong to the same session and are merged by the radio access network or the receiving end host. The merging may be done at different layers, for example by carrier aggregation or multi-stream aggregation if the packets are sent through the NO where the user device 300 is already connected.

In an embodiment, the user device 300 sends the packets over the common carrier via a different NO than the serving NO and the packets are combined into one session at a higher layer, e.g. by a multipath transport protocol. This has the advantage that the access network where the user device 300 is connected does not need to be involved in the network reselection process. It is preferable that the radio access networks support efficient procedures for initial access that limit the signalling and latency for initiating a connection.

The transmissions over the common carriers can be used by the NOs to estimate the channel quality of the radio link between the user device 300 and its network nodes. In a typical embodiment the NO implements the access carrier in all of its network nodes. Based on this channel quality information the NO can determine a cost in terms of resource efficiency to serve the user device 300, which the NO can use to determine whether the NO would like to offer to serve the user device 300 or not. During the handover attempt (e.g. by transmission on the common carrier) the user device 300 may implicitly or explicitly configure its traffic/service so that the NO can determine whether it has the available resources to offer the service. Based on this the NO can decide its service offer (e.g. which price to ask) to the specific user device 300. The SP or the user device 300 would then select the radio access network based on the offer from different NOs.

Therefore, according to this embodiment of the present invention the access grant signal from the network node(s) further comprises spectral efficiency information or price information. Spectral efficiency is a well-defined measure and may referring to the information rate that can be transmitted over a given bandwidth in a specific communication system. It is a measure of how efficiently a limited frequency spectrum is utilized by the physical layer protocol, and sometimes by the media access control (the channel access protocol). The link spectral efficiency of a digital communication system is measured in bit/s/Hz. With regards to the price information, this should be understood as the cost of the transmission from the user device based on a measurement of the channel quality, such as spectral efficiency above. For example, price information based on spectral efficiency would be expressed in €/bit/s/Hz, where € represents a currency. However, price information can be based on other measures, such as bitrate, in which case it would be expressed in €/bit/s. Finally, price info could indicate the cost of the QoS one can receive depending, for instance, on one's subscription, e.g., gold, silver, etc.

In one embodiment the connection reconfiguration (i.e. setup for a new connection for data transmission by another operator or the same operator) can be proposed opportunistically by multiple NOs. Therefore, NOs that are interested in offering services to the user device 300, including the NO that currently serves the user device 300 may candidate to become a serving NO by communicating access grants on its own dedicated or shared carriers. The user device 300 should choose among the different resource grants. Upon user acceptance, the user device 300 acknowledges via the access carrier the new network node for the handover. The acknowledgement is received by the former serving network node which stops transmission of packets to the user device 300.

The above method is aimed at working for both DL and UL each requiring its own common channel, i.e., a DL channel and an UL channel which may be divided either by Frequency Division Duplex (FDD) or TDD. In the common DL channel network nodes also listen to it. When a serving network node transmits packets for a user device 300, another network node may listen for a handover time period, estimate the traffic load for the user device 300, and ask a gateway for offering the user device 300 DL grants. If DL grants are approved then the new serving network node retransmits the latest user packet with an indication for the granted resources.

The AO (Access Operator) may limit the time that a user device 300 can use the access carrier as a way of controlling the load on the access carrier. During each inter-operator handover there would therefore be a limited time that the transmissions are made over the access carrier. If the handover does not succeed during that time the user device 300 will have to return to the original carrier or end the connection.

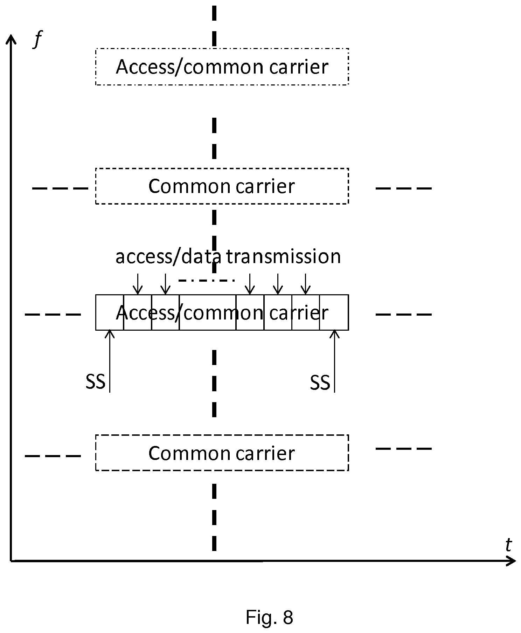

Fig. 8 gives an example of allocation of access carriers and the common carriers according to an embodiment of the present invention. The x-axis represents time and the y-axis represents frequency in Fig. 8.

As shown in Fig. 8, certain dedicated frequency band(s) can be selected as access carrier(s), in which network nodes may broadcast the first and/or the second synchronization signal and access responses. Further, the user device 300 may send access requests and handover indication signals on the access carriers.

The arrows indicated as "SS" in Fig. 8 are examples of the location of the synchronisation signals in the dedicated frequency band. The arrows indicated with "access/data transmission" gives examples of the location of where the access requests and data transmissions may be performed in the dedicated frequency band. In Fig. 8 also independent common carriers are shown. The common carriers may e.g. be given by standards such as 3GPP standards.

If the radio resource is enough for the access carrier, the access carrier can also act as common carrier. It should be noted that the principle shown in Fig. 8 applies to both TDD and FDD systems. It should further be noted that more than one access carrier and/or common carrier can be defined if needed which means that more than one dedicated frequency bands can be used in this respect. Considering the different propagation characteristics for different frequency bands more access carriers can be defined in different parts of the frequency spectrum. Considering that propagation characteristic in high frequency bands (e.g., microwave bands) are significantly different from low frequency bands (e.g., present cellular bands lower than 2.6 GHz) there can be two or more access carriers allocated in a low frequency band and a high frequency bands, respectively.

If the accurate timing difference between the access carrier and conventional control/data carrier can be measured, the radio access network can inform user device 300 the timing difference in the access carrier. Hence, there is no need to set synchronization procedure in the control/data transmission carrier.

If no global unique dedicated frequency band for the present access carrier can be agreed upon, the total number of accessing carriers should be held as small as possible. The principle is to integrate as many operators as possible. For example, at least in one country there should be only one access carrier for all operators of that country.

Furthermore, any method according to the present invention may be implemented in a computer program, having code means, which when run by processing means causes the processing means to execute the steps of the method. The computer program is included in a computer readable medium of a computer program product. The computer readable medium may comprises of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that the present network node 100 and user device 300 comprises the necessary communication capabilities in the form of e.g., functions, means, units, elements, etc., for performing the present solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the present methods.

Especially, the processors of the present devices may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

Finally, it should be understood that the present invention is not limited to the embodiments described above, but also relates to and incorporates all embodiments within the scope of the appended independent claims.

## Claims

1. Network node (100) for a wireless communication system (500), the network node (100) comprising a transceiver (101) configured to
broadcast a first synchronisation signal on a dedicated frequency band, wherein the dedicated frequency band is common to a plurality of operators and wherein the first synchronisation signal indicates an identity of one operator among the plurality of operators, wherein the first synchronisation signal is a sequence or code or codebook in the group comprising: orthogonal codes, codebooks or sequences; semi-orthogonal codes, codebooks or sequences; and quasi-orthogonal codes, codebooks or sequences; and
wherein the sequence, code or codebook indicates the operator identity.

2. Network node (100) according to claim 1, wherein the network node (100) is part of a radio access network (600) of the at least one operator.

3. Network node (100) according to any of the preceding claims, wherein the transceiver (101) further is configured to
broadcast a second synchronisation signal on the dedicated frequency band, wherein the second synchronisation signal indicates a common identity of the plurality of operators.

4. Network node (100) according to any of the preceding claims, wherein the transceiver (101) further is configured to
receive an access request signal from a user device (300) on the dedicated frequency band, wherein the access request signal comprises an access request from the user device (300).

5. Network node (100) according to claim 4, wherein the transceiver (101), in response to reception of the access request signal, further is configured to
transmit an access grant signal to the user device (300) if the user device (300) is a subscriber of the at least one operator, wherein the access grant signal comprises an access grant to the user device (300); else
transmit an operator update signal to the user device (300), wherein the operator update signal comprises an identity of an operator.

6. Network node (100) according to claim 5, wherein the access grant signal further comprises spectral efficiency information or price information associated with a radio link between the network node (100) and the user device (300), wherein the spectral efficiency information or price information is based on the channel quality of the radio link.

7. Network node (100) according to any of the preceding claims, wherein the transceiver (101) further is configured to
receive a handover indication signal from a user device (300) on the dedicated frequency band, wherein the handover indication signal comprises a solicitation message from the user device (300).

8. Network node (100) according to claim 7, wherein the solicitation message comprises a unicast, multicast, broadcast, anycast or geocast address identifying at least one radio access network (600) to which the user device (300) wants to connect.

9. Network node (100) according to any of the preceding claims, wherein the transceiver (101) further is configured to
receive data transmissions from a user device (300) on the dedicated frequency band.

10. User device (300) for a wireless communication system (500), the user device (300) comprising a processor (301) and a transceiver (303);
wherein the transceiver (303) is configured to
receive a first synchronisation signal on a dedicated frequency band, wherein the dedicated frequency band is common to a plurality of operators and wherein the first synchronisation signal indicates an identity of one operator among the plurality of operators, wherein the first synchronisation signal is a sequence or code or codebook in the group comprising: orthogonal codes, codebooks or sequences; semi-orthogonal codes, codebooks or sequences; and quasi-orthogonal codes, codebooks or sequences; and wherein the sequence, code or codebook indicates the operator identity;
wherein the processor (301) is configured to
derive the identity of the at least one operator from the first synchronisation signal; and wherein the transceiver (303) further is configured to
initiate an access procedure to a radio access network (600) of the at least one operator if the derived identity matches an identity in a list of operator identities for the user device (300).

11. User device (300) according to claim 10, wherein the transceiver (303) further is configured to
receive a second synchronisation signal on the dedicated frequency band, wherein the second synchronisation signal indicates a common identity of the plurality of operators; wherein the processor (301) further is configured to
select one operator among the plurality of operators; and wherein the transceiver (303) further is configured to
initiate an access procedure to a radio access network (600) of the selected operator.

12. User device (300) according to claim 10, wherein the transceiver (303) further is configured to
transmit an access request signal to the radio access network (600) on the dedicated frequency band for initiating the access procedure, wherein the access request signal comprises an access request from the user device (300).

13. User device (300) according to any of claims 10 to 12, wherein the transceiver (303) further is configured to
receive an operator update signal, wherein the operator update signal comprises an identity of an operator; and wherein the processor (301) further is configured to
update the list of operator identities according to the operator update signal.

14. User device (300) according to any of claims 10 to 13, wherein the transceiver (303) further is configured to
transmit a handover indication signal to the radio access network (600) on the dedicated frequency band, wherein the handover indication signal comprises a solicitation message from the user device (300).

15. User device according to claim 14, wherein the solicitation message comprises an identity of at least one radio access network (600) to which the user device (300) wants to connect.

16. User device (300) according to any of claims 10 to 15, wherein the transceiver (303) further is configured to
transmit data transmissions to the radio access network (600) on the dedicated frequency band.

17. Method for a wireless communication system (500), the method comprising
broadcasting (201) a first synchronisation signal on a dedicated frequency band, wherein the dedicated frequency band is common to a plurality of operators and wherein the first synchronisation signal indicates an identity of one operator among the plurality of operators, wherein the first synchronisation signal is a sequence or code or codebook in the group comprising: orthogonal codes, codebooks or sequences; semi-orthogonal codes, codebooks or sequences; and quasi-orthogonal codes, codebooks or sequences; and wherein the sequence, code or codebook indicates the operator identity.

18. Method for a wireless communication system (500), the method comprising
receiving (401) a first synchronisation signal on a dedicated frequency band, wherein the dedicated frequency band is common to a plurality of operators and wherein the first synchronisation signal indicates an identity of one operator among the plurality of operators, wherein the first synchronisation signal is a sequence or code or codebook in the group comprising: orthogonal codes, codebooks or sequences; semi-orthogonal codes, codebooks or sequences; and quasi-orthogonal codes, codebooks or sequences; and wherein the sequence, code or codebook indicates the operator identity;
deriving (403) the identity of the at least one operator from the first synchronisation signal; and
initiating (405) an access procedure to a radio access network (600) of the at least one operator if the derived identity matches an identity in a list of operator identities for the user device (300).

19. Computer program with a program code for performing a method according to claim 17 or 18 when the computer program runs on a computer.

## Patentansprüche

1. Netzwerkknoten (100) für ein drahtloses Kommunikationssystem (500), wobei der Netzwerkknoten (100) einen Sendeempfänger (101) aufweist, der dazu ausgelegt ist, ein erstes Synchronisationssignal auf einem dedizierten Frequenzband zu senden, wobei das dedizierte Frequenzband einer Vielzahl an Betreibern gemeinsam ist, und wobei das erste Synchronisationssignal eine Identität eines Betreibers der Vielzahl an Betreibern angibt, wobei das erste Synchronisationssignal eine Sequenz oder ein Code oder ein Codebuch aus der Gruppe, die Folgendes aufweist, ist: orthogonale Codes, Codebücher oder Sequenzen; semiorthogonale Codes, Codebücher oder Sequenzen; und quasiorthogonale Codes, Codebücher oder Sequenzen; und wobei die Sequenz, der Code oder das Codebuch die Betreiberidentität angibt.

2. Netzwerkknoten (100) nach Anspruch 1, wobei der Netzwerkknoten (100) Teil eines Funkzugangsnetzes (600) des mindestens einen Betreibers ist.

3. Netzwerkknoten (100) nach einem der vorhergehenden Ansprüche, wobei der Sendeempfänger (101) ferner dazu ausgelegt ist,
ein zweites Synchronisationssignal auf dem dedizierten Frequenzband zu senden, wobei das zweite Synchronisationssignal eine gemeinsame Identität der Vielzahl an Betreibern angibt.

4. Netzwerkknoten (100) nach einem der vorhergehenden Ansprüche, wobei der Sendeempfänger (101) ferner dazu ausgelegt ist,
ein Zugangsanfragesignal von einer Benutzervorrichtung (300) auf dem dedizierten Frequenzband zu empfangen, wobei das Zugangsanfragesignal eine Zugangsanfrage von der Benutzervorrichtung (300) aufweist.

5. Netzwerkknoten (100) nach Anspruch 4, wobei der Sendeempfänger (101) in Reaktion auf das Zugangsanfragesignal ferner dazu ausgelegt ist,
ein Zugangserlaubnissignal an die Benutzervorrichtung (300) zu übertragen, falls die Benutzervorrichtung (300) ein Teilnehmer des mindestens einen Betreibers ist, wobei das Zugangserlaubnissignal eine Zugangserlaubnis auf die Benutzervorrichtung (300) aufweist; oder
ein Betreiberaktualisierungssignal an die Benutzervorrichtung (300) zu übertragen, wobei das Betreiberaktualisierungssignal eine Identität eines Betreibers aufweist.

6. Netzwerkknoten (100) nach Anspruch 5, wobei das Zugangserlaubnissignal ferner spektralen Effizienzinformationen oder Preisinformationen aufweist, die einer Funkverbindung zwischen dem Netzwerkknoten (100) und der Benutzervorrichtung (300) zugeordnet sind, wobei die spektralen Effizienzinformationen oder Preisinformationen auf der Kanalqualität der Funkverbindung basieren.

7. Netzwerkknoten (100) nach einem der vorhergehenden Ansprüche, wobei der Sendeempfänger (101) ferner dazu ausgelegt ist,
ein Übergabeindikationssignal von einer Benutzervorrichtung (300) auf dem dedizierten Frequenzband zu empfangen, wobei das Übergabeindikationssignal eine Anforderungsnachricht von der Benutzervorrichtung (300) aufweist.

8. Netzwerkknoten (100) nach Anspruch 7, wobei die Anfragenachricht eine Unicast-, Multicast-, Broadcast-, Anycast- oder Geocast-Adresse aufweist, die mindestens ein Funkzugangsnetz (600) identifiziert, mit dem die Benutzervorrichtung (300) eine Verbindung herstellen möchte.

9. Netzwerkknoten (100) nach einem der vorhergehenden Ansprüche, wobei der Sendeempfänger (101) ferner dazu ausgelegt ist,
Datenübertragungen von einer Benutzervorrichtung (300) auf dem dedizierten Frequenzband zu empfangen.

10. Netzwerkknoten (300) für ein drahtloses Kommunikationssystem (500), wobei die Benutzervorrichtung (300) einen Prozessor (301) und einen Sendeempfänger (303) aufweist, wobei der Sendeempfänger (303) dazu ausgelegt ist,
ein erstes Synchronisationssignal auf einem dedizierten Frequenzband zu empfangen, wobei das dedizierte Frequenzband einer Vielzahl an Betreibern gemeinsam ist, und wobei das erste Synchronisationssignal eine Identität eines Betreibers der Vielzahl an Betreibern angibt, wobei das erste Synchronisationssignal eine Sequenz oder ein Code oder ein Codebuch aus der Gruppe, die Folgendes aufweist, ist: orthogonale Codes, Codebücher oder Sequenzen; semiorthogonale Codes, Codebücher oder Sequenzen; und quasiorthogonale Codes, Codebücher oder Sequenzen; und wobei die Sequenz, der Code oder das Codebuch die Betreiberidentität angibt;
wobei der Prozessor (301) dazu ausgelegt ist, die Identität des mindestens einen Betreibers von dem ersten Synchronisationssignal zu erhalten; und
wobei der Sendeempfänger (303) ferner dazu ausgelegt ist, einen Zugangsvorgang zu einem Funkzugangsnetz (600) des mindestens einen Betreibers zu initiieren, falls die erhaltene Identität einer Identität in einer Liste von Betreiberidentitäten für die Benutzervorrichtung (300) entspricht.

11. Benutzervorrichtung (300) nach Anspruch 10, wobei der Sendeempfänger (303) ferner dazu ausgelegt ist,
ein zweites Synchronisationssignal auf dem dedizierten Frequenzband zu empfangen, wobei das zweite Synchronisationssignal eine gemeinsame Identität der Vielzahl an Betreibern angibt; wobei der Prozessor (301) ferner dazu ausgelegt ist,
einen Betreiber aus der Vielzahl an Betreibern auszuwählen; und wobei der Sendeempfänger (303) ferner dazu ausgelegt ist,
einen Zugangsvorgang zu einem Funkzugangsnetz (600) des ausgewählten Betreibers zu initiieren.

12. Benutzervorrichtung (300) nach Anspruch 10, wobei der Sendeempfänger (303) ferner dazu ausgelegt ist,
ein Zugangsanfragesignal auf dem dedizierten Frequenzband zu dem Funkzugangsnetz (600) zu übertragen, um den Zugangsvorgang zu initiieren, wobei das Zugangsanfragesignal eine Zugangs anfrage von der Benutzervorrichtung (300) aufweist.

13. Benutzervorrichtung (300) nach einem der Ansprüche 10 bis 12, wobei der Sendeempfänger (303) ferner dazu ausgelegt ist,
ein Betreiberaktualisierungssignal zu empfangen, wobei das Betreiberaktualisierungssignal eine Identität eines Betreibers aufweist; und wobei der Prozessor (301) ferner dazu ausgelegt ist,
die Liste an Betreiberidentitäten gemäß dem Betreiberaktualisierungssignal zu aktualisieren.

14. Benutzervorrichtung (300) nach einem der Ansprüche 10 bis 13, wobei der Sendeempfänger (303) ferner dazu ausgelegt ist,
ein Übergabeindikationssignal auf dem dedizierten Frequenzband zu dem Funkzugangsnetz (600) zu übertragen, wobei das Übergabeindikationssignal eine Anforderungsnachricht von der Benutzervorrichtung (300) aufweist.

15. Benutzervorrichtung nach Anspruch 14, wobei die Anfragenachricht eine Identität mindestens eines Funkzugangsnetzes (600) aufweist, mit dem die Benutzervorrichtung (300) eine Verbindung herstellen möchte.

16. Benutzervorrichtung (300) nach einem der Ansprüche 10 bis 15, wobei der Sendeempfänger (303) ferner dazu ausgelegt ist,
Datenübertragungen auf dem dedizierten Frequenzband zu dem Funkzugangsnetz (600) zu übertragen.

17. Verfahren für ein drahtloses Kommunikationssystem (500), wobei das Verfahren Folgendes aufweist:
Senden (201) eines ersten Synchronisationssignals auf einem dedizierten Frequenzband, wobei das dedizierte Frequenzband einer Vielzahl an Betreibern gemeinsam ist, und wobei das erste Synchronisationssignal eine Identität eines Betreibers der Vielzahl an Betreibern angibt, wobei das erste Synchronisationssignal eine Sequenz oder ein Code oder ein Codebuch aus der Gruppe, die Folgendes aufweist, ist: orthogonale Codes, Codebücher oder Sequenzen; semiorthogonale Codes, Codebücher oder Sequenzen; und quasiorthogonale Codes, Codebücher oder Sequenzen; und wobei die Sequenz, der Code oder das Codebuch die Betreiberidentität angibt.

18. Verfahren für ein drahtloses Kommunikationssystem (500), wobei das Verfahren Folgendes aufweist:
Empfangen (401) eines ersten Synchronisationssignals auf einem dedizierten Frequenzband, wobei das dedizierte Frequenzband einer Vielzahl an Betreibern gemeinsam ist, und wobei das erste Synchronisationssignal eine Identität eines Betreibers der Vielzahl an Betreibern angibt, wobei das erste Synchronisationssignal eine Sequenz oder ein Code oder ein Codebuch aus der Gruppe, die Folgendes aufweist, ist: orthogonale Codes, Codebücher oder Sequenzen; semiorthogonale Codes, Codebücher oder Sequenzen; und quasiorthogonale Codes, Codebücher oder Sequenzen; und wobei die Sequenz, der Code oder das Codebuch die Betreiberidentität angibt;
Erhalten (403) der Identität des mindestens einen Betreibers von dem ersten Synchronisationssignal; und
Initiieren (405) eines Zugangsvorgangs zu einem Funkzugangsnetz (600) des mindestens einen Betreibers, falls die erhaltene Identität einer Identität in einer Liste von Betreiberidentitäten für die Benutzervorrichtung (300) entspricht.

19. Computerprogramm mit einem Programmcode zum Ausführen des Verfahrens gemäß Anspruch 17 oder 18, wenn das Computerprogramm auf einem Computer ausgeführt wird.

## Revendications

1. Noeud de réseau (100) pour un système de communication sans fil (500), le noeud de réseau (100) comprenant un émetteur-récepteur (101) configuré pour radiodiffuser un premier signal de synchronisation sur une bande de fréquence dédiée, dans lequel la bande de fréquence dédiée est commune à une pluralité d'opérateurs et dans lequel le premier signal de synchronisation indique une identité d'un opérateur parmi la pluralité d'opérateurs, dans lequel le premier signal de synchronisation est une séquence ou un code ou un livre de codes dans le groupe comprenant : des codes, livres de codes ou séquences orthogonaux ; des codes, livres de codes ou séquences semi-orthogonaux ; et des codes, livres de codes ou séquences quasi orthogonaux ; et dans lequel la séquence, le code ou livre de codes indique l'identité d'opérateur.

2. Noeud de réseau (100) selon la revendication 1, dans lequel le noeud de réseau (100) fait partie d'un réseau d'accès radio (600) de l'au moins un opérateur.

3. Noeud de réseau (100) selon l'une quelconque des revendications précédentes, dans lequel l'émetteur-récepteur (101) est en outre configuré pour
radiodiffuser un second signal de synchronisation sur la bande de fréquence dédiée, dans lequel le second signal de synchronisation indique une identité commune de la pluralité d'opérateurs.

4. Noeud de réseau (100) selon l'une quelconque des revendications précédentes, dans lequel l'émetteur-récepteur (101) est en outre configuré pour
recevoir un signal de demande d'accès en provenance d'un dispositif utilisateur (300) sur la bande de fréquence dédiée, dans lequel le signal de demande d'accès comprend une demande d'accès provenant du dispositif utilisateur (300).

5. Noeud de réseau (100) selon la revendication 4, dans lequel l'émetteur-récepteur (101), en réponse à la réception du signal de demande d'accès, est en outre configuré pour transmettre un signal d'autorisation d'accès au dispositif utilisateur (300) si le dispositif utilisateur (300) est un abonné de l'au moins un opérateur, dans lequel le signal d'autorisation d'accès comprend une autorisation d'accès au dispositif utilisateur (300) ; sinon
transmettre un signal de mise à jour d'opérateur au dispositif utilisateur (300), dans lequel le signal de mise à jour d'opérateur comprend une identité d'un opérateur.

6. Noeud de réseau (100) selon la revendication 5, dans lequel le signal d'autorisation d'accès comprend en outre des informations de rendement spectral ou des informations de prix associées à une liaison radio entre le noeud de réseau (100) et le dispositif utilisateur (300), dans lequel les informations de rendement spectral ou les informations de prix sont basées sur la qualité de voie de la liaison radio.

7. Noeud de réseau (100) selon l'une quelconque des revendications précédentes, dans lequel l'émetteur-récepteur (101) est en outre configuré pour
recevoir un signal d'indication de transfert intercellulaire en provenance d'un dispositif utilisateur (300) sur la bande de fréquence dédiée, dans lequel le signal d'indication de transfert intercellulaire comprend un message de sollicitation provenant du dispositif utilisateur (300).

8. Noeud de réseau (100) selon la revendication 7, dans lequel le message de sollicitation comprend une adresse de monodiffusion, multidiffusion, radiodiffusion, unidiffusion aléatoire ou géodiffusion identifiant au moins un réseau d'accès radio (600) auquel le dispositif utilisateur (300) veut se connecter.

9. Noeud de réseau (100) selon l'une quelconque des revendications précédentes, dans lequel l'émetteur-récepteur (101) est en outre configuré pour
recevoir des transmissions de données en provenance d'un dispositif utilisateur (300) sur la bande de fréquence dédiée.

10. Dispositif utilisateur (300) pour un système de communication sans fil (500), le dispositif utilisateur (300) comprenant un processeur (301) et un émetteur-récepteur (303) ;
dans lequel l'émetteur-récepteur (303) est configuré pour
recevoir un premier signal de synchronisation sur une bande de fréquence dédiée, dans lequel la bande de fréquence dédiée est commune à une pluralité d'opérateurs et dans lequel le premier signal de synchronisation indique une identité d'un opérateur parmi la pluralité d'opérateurs, dans lequel le premier signal de synchronisation est une séquence ou un code ou un livre de codes dans le groupe comprenant : des codes, livres de codes ou séquences orthogonaux ; des codes, livres de codes ou séquences semi-orthogonaux ; et des codes, livres de codes ou séquences quasi orthogonaux ; et dans lequel la séquence, le code ou livre de codes indique l'identité d'opérateur ;
dans lequel le processeur (301) est configuré pour
dériver l'identité de l'au moins un opérateur à partir du premier signal de synchronisation ; et dans lequel l'émetteur-récepteur (303) est en outre configuré pour lancer une procédure d'accès à un réseau d'accès radio (600) de l'au moins un opérateur si l'identité dérivée concorde avec une identité dans une liste d'identités d'opérateur pour le dispositif utilisateur (300).

11. Dispositif utilisateur (300) selon la revendication 10, dans lequel l'émetteur-récepteur (303) est en outre configuré pour
recevoir un second signal de synchronisation sur la bande de fréquence dédiée, dans lequel le second signal de synchronisation indique une identité commune de la pluralité d'opérateurs ; dans lequel le processeur (301) est en outre configuré pour sélectionner un opérateur parmi la pluralité d'opérateurs ; et dans lequel l'émetteur-récepteur (303) est en outre configuré pour
lancer une procédure d'accès à un réseau d'accès radio (600) de l'opérateur sélectionné.

12. Dispositif utilisateur (300) selon la revendication 10, dans lequel l'émetteur-récepteur (303) est en outre configuré pour
transmettre un signal de demande d'accès au réseau d'accès radio (600) sur la bande de fréquence dédiée pour lancer la procédure d'accès, dans lequel le signal de demande d'accès comprend une demande d'accès provenant du dispositif utilisateur (300).

13. Dispositif utilisateur (300) selon l'une quelconque des revendications 10 à 12, dans lequel l'émetteur-récepteur (303) est en outre configuré pour
recevoir un signal de mise à jour d'opérateur, dans lequel le signal de mise à jour d'opérateur comprend une identité d'un opérateur ; et dans lequel le processeur (301) est en outre configuré pour
mettre à jour la liste d'identités d'opérateur selon le signal de mise à jour d'opérateur.

14. Dispositif utilisateur (300) selon l'une quelconque des revendications 10 à 13, dans lequel l'émetteur-récepteur (303) est en outre configuré pour
transmettre un signal d'indication de transfert intercellulaire au réseau d'accès radio (600) sur la bande de fréquence dédiée, dans lequel le signal d'indication de transfert intercellulaire comprend un message de sollicitation provenant du dispositif utilisateur (300).

15. Dispositif utilisateur selon la revendication 14, dans lequel le message de sollicitation comprend une identité d'au moins un réseau d'accès radio (600) auquel le dispositif utilisateur (300) veut se connecter.

16. Dispositif utilisateur (300) selon l'une quelconque des revendications 10 à 15, dans lequel l'émetteur-récepteur (303) est en outre configuré pour
transmettre des transmissions de données au réseau d'accès radio (600) sur la bande de fréquence dédiée.

17. Procédé pour un système de communication sans fil (500), le procédé comprenant la radiodiffusion (201) d'un premier signal de synchronisation sur une bande de fréquence dédiée, dans lequel la bande de fréquence dédiée est commune à une pluralité d'opérateurs et dans lequel le premier signal de synchronisation indique une identité d'un opérateur parmi la pluralité d'opérateurs, dans lequel le premier signal de synchronisation est une séquence ou un code ou livre de codes dans le groupe comprenant : des codes, livres de codes ou séquences orthogonaux ; des codes, livres de codes ou séquences semi-orthogonaux ; et des codes, livres de codes ou séquences quasi orthogonaux ; et dans lequel la séquence, le code ou livre de codes indique l'identité d'opérateur.

18. Procédé pour un système de communication sans fil (500), le procédé comprenant la réception (401) d'un premier signal de synchronisation sur une bande de fréquence dédiée, dans lequel la bande de fréquence dédiée est commune à une pluralité d'opérateurs et dans lequel le premier signal de synchronisation indique une identité d'un opérateur parmi la pluralité d'opérateurs, dans lequel le premier signal de synchronisation est une séquence ou un code ou livre de codes dans le groupe comprenant : des codes, livres de codes ou séquences orthogonaux ; des codes, livres de codes ou séquences semi-orthogonaux ; et des codes, livres de codes ou séquences quasi orthogonaux ; et dans lequel la séquence, le code ou livre de codes indique l'identité d'opérateur ;
la dérivation (403) de l'identité de l'au moins un opérateur à partir du premier signal de synchronisation ; et
le lancement (405) d'une procédure d'accès à un réseau d'accès radio (600) de l'au moins un opérateur si l'identité dérivée concorde avec une identité dans une liste d'identités d'opérateur pour le dispositif utilisateur (300).

19. Programme d'ordinateur doté d'un code de programme pour réaliser un procédé selon la revendication 17 ou 18 lorsque le programme d'ordinateur s'exécute sur un ordinateur.
